# EUROPÄISCHE PATENTSCHRIFT

(11) **EP 2 229 995 B1**
(45) Veröffentlichungstag und Bekanntmachung des Hinweises auf die Patenterteilung: **06.06.2012**
(21) Anmeldenummer: 10156491.2
(22) Anmeldetag: 15.03.2010
(51) Int. Cl.: B01D 46/00, B01D 46/52

(54) **Herstellungsverfahren für ein Filterelement**
Production method for a filter element
Procédé de fabrication pour un élément de filtre

(30) Priorität: 19.03.2009 DE 102009013528
(43) Veröffentlichungstag der Anmeldung: 22.09.2010
(73) Patentinhaber: MANN + HUMMEL GMBH, 71638 Ludwigsburg (DE)
(72) Erfinder: Linhart, Jochen, 71409 Schwaikheim (DE); Rohrmeier, Josef, 84082 Laberweinting (DE); Klupski, Susanne, 84032 Altdorf (DE)

(56) Entgegenhaltungen:
- EP-A1- 1 582 248
- WO-A1-03/047721
- DE-A1-102005 028 713
- US-A- 3 025 963

## Beschreibung

### Technisches Gebiet

Die vorliegende Erfindung betrifft ein Herstellungsverfahren für ein Filterelement, welches insbesondere mehrere Schichten von gewellten und glatten Materialien aufweist.

### Stand der Technik

Es sind Filterelemente bekannt, welche aus Verbünden von aneinandergereihten Strömungskanälen aufgebaut sind. Dabei sind z. B. gewellte und glatte Filterpapiere miteinander verklebt und aufgewickelt, um ein kompaktes Filterelement zu schaffen. An den Stirnseiten sind die Kanäle dann abwechselnd verschlossen, sodass keine direkte Strömung durch die zwischen den Filterpapieren gebildeten Kanälen möglich ist. In der DE 10 2006 025 235 A1 sind beispielsweise entsprechend gewickelte Filterelemente beschrieben.

Ähnliche gewickelte Strukturen werden, wie in der DE 10 2006 056 195 A1 beschrieben, auch eingesetzt, um keramische Filterkörper herzustellen. Ein gewickeltes Material wird dabei in eine Keramikflüssigkeit getaucht, welche anschließend gebrannt wird.

Bei all diesen gewickelten und mehrschichtigen Elementen erfolgt eine Fixierung der Lagen zueinander in der Regel durch Klebstoffe, die entweder vollständig flächig auf die einzelnen Schichten aufgetragen werden oder aber senkrecht zu den Kanälen beispielsweise entlang einer Wickelrichtung in Streifen aufgetragen werden. Häufig lässt sich dadurch einerseits nicht die notwendige Stabilität erzielen. Andererseits verschließt der Klebstoff mögliche Filteroberflächen, wodurch die Effizienz reduziert wird.
Aus der US 3,025,963 sowie aus der EP 1 582 248 A1 ist es bekannt, beim Verkleben eines gewellten und eines glatten Materials selektiv die Wellenberge des gewellten Materials mit Klebstoff zu versehen. Der Klebstoffauftrag auf die Wellenberge stellt aber hohe Anforderungen an den Herstellprozess.

Vor diesem Hintergrund liegt der vorliegenden Erfindung die Aufgabe zugrunde, ein verbessertes Verfahren zum Herstellen von Filterelementen, insbesondere mit gewickelten Schichten, bereitzustellen.

### Offenbarung der Erfindung

Diese Aufgabe wird durch ein Verfahren gemäß Patentanspruch 1 gelöst.

Demgemäß ist ein Verfahren zum Herstellen eines Filterelementes, welches aneinanderliegende Schichten von einem glatten Material und einem gewellten Material mit Wellenbergen und Wellentälern umfasst, vorgesehen. Die Wellenberge des gewellten Materials werden dabei auf das glatte Material geklebt, und ein Klebstoffauftrag erfolgt streifenförmig auf das glatte Material im Wesentlichen parallel zu den aufzuklebenden Wellenbergen des gewellten Materials.

Durch das parallel zu den Wellenbergen vorgenommene Auftragen von Klebstoffstreifen wird zum einen bei einem Auftrag auf das glatte Material nur streifenweise Filtermaterial durch den Klebstoff verschlossen. Trotzdem ergibt sich eine besonders gute Steifigkeit durch die Fixierung praktisch aller Wellenberge und -täler, die an glatte Materialabschnitte anliegen. Erfindungsgemäß wird der Klebstoff streifenförmig auf das glatte Material aufgetragen und anschließend werden entlang der sich ergebenden Klebstoffstreifen die Wellenberge aufgedrückt. Man spricht bei einer Kombination von glattem und darauf aufgeklebtem Material auch von einem Halbzeugmaterial.

Bei einer Variante des Verfahrens wird ein solches Halbzeugmaterial, welches das glatte und das gewellte Material umfasst, aufgewickelt, wobei der Klebstoffauftrag im Wesentlichen senkrecht zu der Wickelrichtung erfolgt. Es ist beispielsweise denkbar, eine Wickelachse zu definieren, um die das Halbzeugmaterial gewickelt wird. Während konventioneller weise der Klebstoffauftrag auf das glatte oder gewellte Material senkrecht zu dieser Wickelachse erfolgte, wird bei dem vorgestellten Verfahren der Klebstoffauftrag parallel zu der Wickelachse und damit senkecht zu der Wickelrichtung vollzogen. Damit wird ermöglicht, dass beispielsweise Streifen auf Wasser- oder Lösemittelbasis hergestelltem Leim die jeweiligen Wellenberge fixieren.

Vorzugsweise wird der Klebstoff ausschließlich parallel zu den Wellenbergen aufgetragen. Damit wird verhindert, dass bei einer Verwendung von Leimfäden, beispielsweise senkrecht oder die Wellenbergen schneidend, Filterfläche reduziert wird.

In einer Variante des Verfahrens wird der Klebstoff durch ein Druckverfahren, insbesondere ein Siebdruck oder Offsetdruck, auf das glatte Material gedruckt. Mittels einer Trommel oder anderer Druckmedien kann z. B. ein streifenförmiges Muster auf das glatte Material aufgedruckt werden und anschließend die Wicklung derart erfolgen, dass die Leimstreifen passgenau auf die Wellenberge gedrückt werden. Als Klebstoff kommt z. B. auch ein Schmelzkleber oder Pulver in Frage, die beim Erhitzen ihre Klebeeigenschaften entfalten. Vorzugsweise werden Klebstoffe verwendet, die sich drucken lassen.

Es ist in einer anderen Variante ferner möglich, den Klebstoff mit einer Rolle aufzutragen. Beispielsweise kann eine Rolle auf das gewellte Material gedruckt werden, wodurch nur die Wellenberge teilweise mit Klebstoff bestrichen werden.

Das glatte oder das gewellte Material umfasst vorzugsweise ein Filtervließmaterial, wie z. B. auch ein Zellulosematerial.

In einer Erweiterung des Verfahrens kann das Filterelement zum Herstellen eines Partikelfilters, wie z. B. für Dieselabgase, verwendet werden. Dabei wird das Filterelement in eine Keramikflüssigkeit, bzw. eine Dispersion oder Suspersion von Keramikpartikeln, getaucht oder getränkt und anschließend getrocknet. Beim Sintern oder Brennen der entstehenden Keramik kann das jeweilige (Filter-)Material, welches als Matrix für die Keramikdispersionspartikel dient, verbrannt werden, sodass ein keramischer Filterkörper verbleibt.

Es ist ferner ein erfindungsgemäß hergestelltes Filterelement vorgesehen.

Demgemäß umfasst das Filterelement aneinanderliegende Schichten von einem glatten Material und einem gewellten Material, welches Wellenberge und Wellentäler umfasst. Die Wellenberge des gewellten Materials sind auf das glatte Material mit Klebstoffstreifen geklebt. Dabei verlaufen die auf das glatte Material aufgetragenen Klebstoffstreifen im Wesentlichen parallel zu den Wellenbergen.

Unter im Wesentlichen parallel wird verstanden, dass, wenn die Wellenberge auf das glatte Material aufgebracht werden, entlang der jeweiligen Kontaktfläche zwischen dem Wellenkamm und dem glatten Material ein vorzugsweise zusammenhängender Klebstoffstreifen vorliegt. Im Wesentlichen parallel bedeutet auch, dass zwischen den Streifen aus Klebstoff nicht mit Klebstoff benetzte Materialoberflächen vorliegen.

Das Filterelement kann z. B. als Kompaktluftfilter ausgebildet werden. Dabei gibt sich durch die gründliche Verklebung der Wellen- und glatten Materialien eine höhere Stabilität des Halbzeugs sowie auch des gewickelten Filterelementes. Es ist auch das Risiko von einer Delamination, also eines sich Lösens einer Wellenlage von einer Glattlage vermindert. Durch die verbesserte Verklebung entstehen auch weniger Strömungsverluste durch ungefilterte Luft, welche in benachbarte Kanäle bei konventionellen Filtern eindringen kann. Insgesamt wird das Filterelement, welches nach dem vorgeschlagenen Verfahren hergestellt wurde, auch stabiler.

Weitere vorteilhafte Ausgestaltungen und Weiterbildungen der Erfindung sind Gegenstand der Unteransprüche sowie der im Folgenden beschriebenen Ausführungsbeispiele.

### Kurze Beschreibung der Zeichnungen

Die Erfindung wird nachfolgend ferner anhand mehrerer Ausführungsbeispiele unter Bezugnahme auf die beigelegten Figuren näher erläutert. Es zeigt dabei:

Fig. 1 - 3: perspektivische und Querschnittsansichten eines Filterelements während der Herstellung;

Fig. 4: eine perspektivische und Querschnittsansicht zur Erläuterung eines Druckauftrags von Klebstoffmaterial auf glattes Material;

Fig. 5: eine perspektivische und Querschnittsansicht zur Erläuterung eines Rollenauftrags von Klebstoffmaterial auf Wellenberge; und

Fig. 6: eine Querschnittsansicht eines gewickelten Filters.

In den Figuren sind gleiche oder funktionsgleiche Elemente, sofern nichts Anderes angegeben ist, mit denselben Bezugszeichen versehen worden.

### Ausführungsform(en) der Erfindung

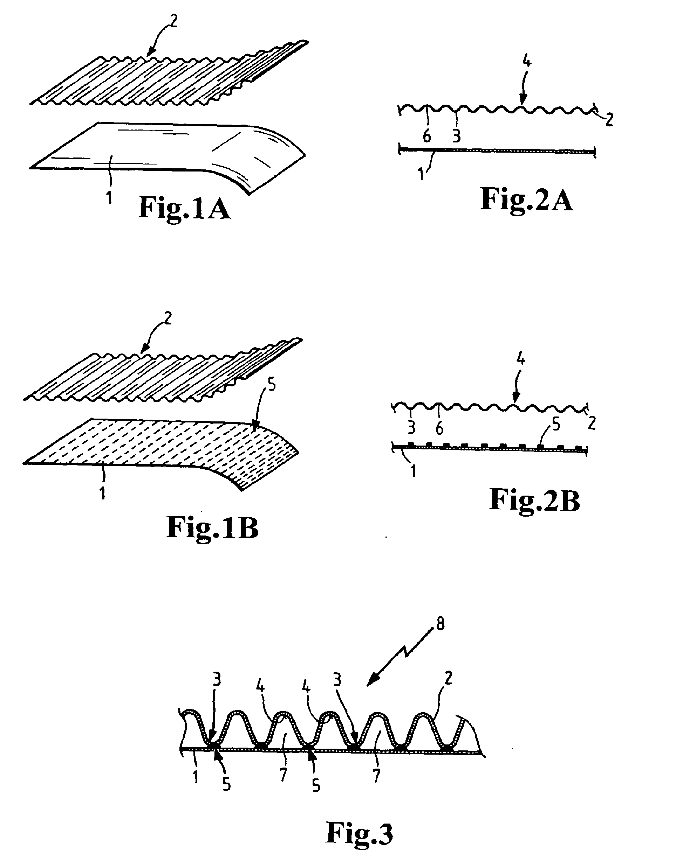

In der Figur 1 sind Zustände von Bestandteilen eines herzustellenden Filterelementes perspektivisch dargestellt. Figur 2 zeigt entsprechende Querschnittsdarstellungen während der Herstellung von Halbzeugmaterial für z. B. Kompaktluftfilter im Kraftfahrzeugbereich. In der Figur 1A ist zunächst eine Glattlage oder ein glattes Filtermaterial in Bogenform 1 dargestellt. Um ein Halbzeug zu bilden, ist ferner ein Bogen 2 aus gewelltem Filtermaterial vorgesehen. Ähnlich einer Wellpappe werden die beiden Materialbögen 1, 2 miteinander verbunden. In der Figur 2A ist das Glattmaterial 1 dargestellt sowie das gewellte Material 2, welches Wellentäler 6 und Wellenberge 3 umfasst. In Bezug auf das Glattmaterial 1 ist beispielsweise ein Wellenberg 3 und ein Wellental 6 angedeutet.

Unter einem Wellenberg 3 wird im Folgenden bei dem gewellten Filtermaterial 2 verstanden, dass die zugewandte Seite des gewellten Bogens 2 eine Erhebung aufweist. Üblicherweise hat das gewellte Material 2 regelmäßige Wellen oder auch Faltungen. Daher kann man auch bei zickzackgefaltetem Material von einem Wellenmaterial sprechen. Die Wellen entsprechen dabei abgerundeten Faltkanten.

Um die beiden Materialbögen, das Glattmaterial 1 und das gewellte Material 2 miteinander zu verbinden, wird, wie in der Figur 1B angedeutet ist, ein streifenförmiger Klebstoffauftrag vorgenommen. Die Figur 1B zeigt die gestrichelten Linien 5 entlang derer jeweils ein Klebstoffstreifen auf das Glattmaterial 1 aufgebracht wird. In der Querschnittsansicht der Figur 2B sieht man auf dem Glattmaterial 1 die Klebstoffstreifen 5, welche jeweils gegenüber dem Wellenberg 3 des gewellten Materials 2 vorliegen. Es ist vorgesehen, den Wellenberg 3 auf den Klebstoffstreifen 5 aufzubringen und damit zu fixieren. Die dem Glattmaterial 1 abgewandten Wellenberge 4 werden nicht weiter betrachtet.

In der Figur 3 ist nach Abschluss des Klebevorgangs ein Halbzeug 8 im Querschnitt dargestellt. Dabei umfasst das Halbzeug 8 mindestens eine glatte Materialfläche 1, auf die die Klebstoffstreifen 5 aufgebracht sind, welche wiederum mit den Wellenbergen 3 in Kontakt sind und daher das gewellte Material 2 mit dem glatten Material 1 verbinden. Es ergibt sich somit ein Hohlraum 7 zwischen jeweils benachbarten Wellenbergen 3, die über die Klebstoffstreifen 5 auf das glatte Material 1 geklebt sind. Zwischen jeweils einem Wellenberg 3 liegt ein Wellental 4 innerhalb des Hohlraums 7. Die vorgeschlagene Vorgehensweise liefert somit mittels der Klebstoffstreifen 5 abgeschlossene Hohlräume oder Röhren, in die zu filterndes Fluid eintreten kann.

Während üblicherweise keine Verklebung benachbarter Wellenberge auf dem Glattmaterial erfolgt, verhindert der Klebstoff ein Übertreten von Fluid zwischen benachbarten Hohlräumen. Die Filterwirkung sowie die Stabilität eines Filtermaterials mit entsprechendem Halbzeug 8 wird daher verbessert.

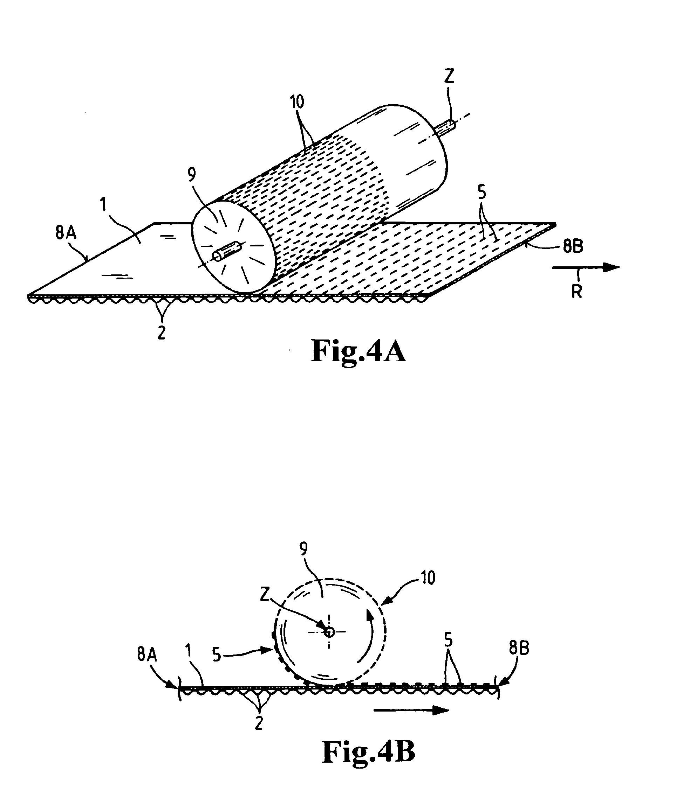

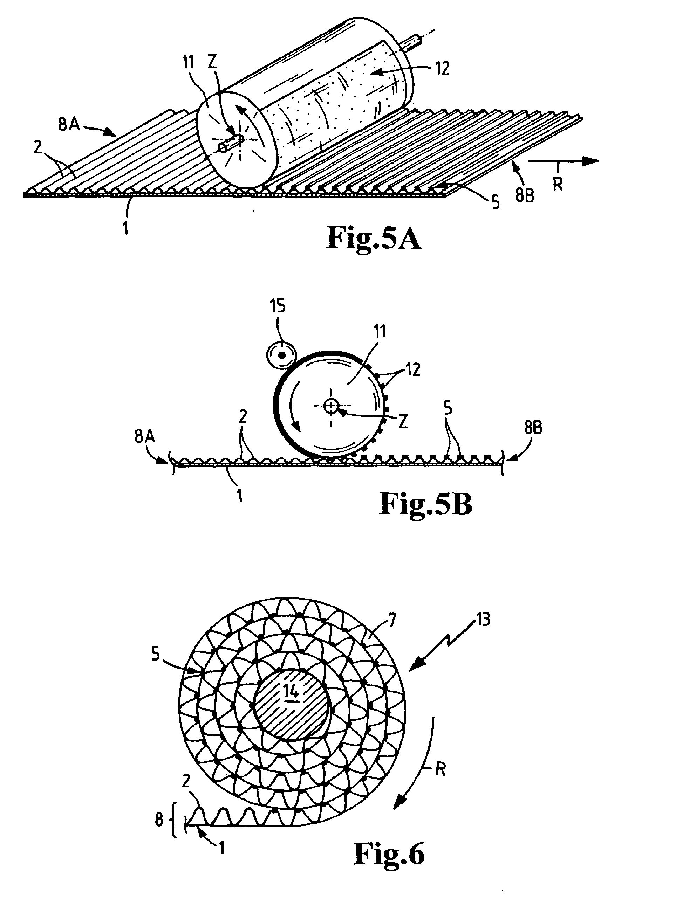

Während die Figuren 1 bis 3 allgemein einen streifenförmigen parallel zu den Wellenbergen vorgenommenen Klebstoffauftrag zeigen, sind in den Figuren 4 und 5 beispielhafte Druckverfahren für den Klebstoffauftrag illustriert. In der Figur 4A ist perspektivisch dargestellt, wie auf die glatte Seite eines Halbzeugs streifenförmige Klebstoffspuren gedruckt werden. Dazu ist eine Drucktrommel oder -walze 9 vorgesehen, die entlang ihrer Achse Z auf der Oberfläche streifenförmige Öffnungen 10 aufweist, durch die Klebstoff auf die Walzen- oder Trommeloberfläche austreten kann. Die gestrichelten Linien zeigen den Bereich an, der auf der Trommeloberfläche mit Klebstoff benetzt ist. Dazu können z. B. mikrometer-große Löcher in die Trommeloberfläche eingearbeitet werden.

In der Figur 4B ist eine entsprechende Querschnittsansicht gezeigt, in der die Trommel 9 an ihrer Oberfläche Öffnungen 10 aufweist, durch die Klebstoff 5 austreten kann und auf die glatte Oberfläche 1 des Halbzeugs gepresst bzw. gedruckt wird. Die Rolle 9 fördert dabei das Halbzeug aus dem glatten Filtermaterial 1 und dem gewellten Filtermaterial 2 entlang der Förderrichtung R, wie es in der Figur 4A dargestellt ist. In der Figur 4A wird das Halbzeug von links nach rechts auch durch die Rolle gefördert.

An der Oberfläche der linken Seite des Halbzeugs 8A, also vor dem Durchlauf mit der Rolle 9, ist die Oberfläche des glatten Materialbogens 1 sauber. Auf der rechten Seite, nach Durchlauf durch die Rolle, sind auf der Oberseite des glatten Materials 1 Klebstoffstreifen 5 aufgedruckt worden. Dies kann nach dem Prinzip des Offsetdrucks oder aber auch des Siebdrucks erfolgen. Das Halbzeug 8B hat daher einen streifenförmigen Klebstoffauftrag 5. Dies ist in der Querschnittsansicht der Figur 4B ebenfalls erläutert, wobei die Klebstoffstreifen 5 auf der rechten Seite 8B auf dem glatten Filtermaterial 1 aufgedruckt sind und auf der linken Seite noch an der Rolle 9 haften.

Es ist anschließend möglich, das Halbzeug um eine Achse aufzurollen, wie es beispielsweise in der Figur 6 beispielhaft dargestellt ist. In der Figur 6 ist das Halbzeug 8, welches beispielsweise mittels einer Druckrolle, wie sie in der Figur 4 dargestellt ist, mit Klebestreifen bedruckt wurde und um eine Achse oder einen Körper 14 aufgewickelt worden. Dabei ist eine Wickelrichtung R angedeutet. Die Figur 6 stellt prinzipiell einen Querschnitt oder eine Draufsicht auf die Stirnfläche eines gewickelten Filterelementes 13 dar.

In der Figur 5 ist eine alternative Aufbringung von Klebstoff dargestellt, bei der Wellenberge mit Klebstoff bestrichen werden. In der Figur 5A ist eine perspektivische Ansicht dargestellt, bei der eine Rolle 11 mit einem Klebstoff 12 benetzt ist. Diese Rolle wird auf das gewellte Material 2 eines Halbzeugs 8 abgerollt. Somit verbleibt auf den Wellenbergen oder -kämmen jeweils ein Klebstoffstreifen 5. Der Klebstoff kann auf die Rollenoberfläche beispielsweise durch Verteilen mit einer zweiten Rolle 15 erzielt werden.

In der Figur 5B ist im Querschnitt gezeigt, wie die gewellte Oberfläche 2 des Halbzeugs 8 von der Rolle oder Walze 11 gefördert wird, welche mit Klebstoff 12 bestrichen ist. Auf der rechten Seite ergeben sich die mit Klebstoffstreifen 5 bestrichenen Wellenberge. In der Folge kann, wie bereits zur Figur 6 erläutert wurde, ein gewickelter Filter hergestellt werden, wobei die mit Klebstoff bestrichenen Wellenberge oder das mit Klebstoffstreifen bedruckte glatte Material um eine Achse 14 aufgewickelt wird. Dies ist in der Figur 6 schematisch erläutert.

Ein entsprechendes Filterelement 13 ergibt sich durch Wickeln entlang einer Wickelrichtung R, beispielsweise um einen inneren Körper 14. Durch abwechselnden Verschluss der Hohlräume 7 an einer Stirnseite ergeben sich eine Vielzahl von Strömungskanälen für zu filterndes Fluid, wie beispielsweise Luft bei einem kompakten Luftfilter oder auch Abgaspartikel, wie beispielsweise bei einem Dieselpartikelfilter.

Das Herstellungsverfahren kann erweitert werden, indem ein entsprechend aufgewickeltes Filterelement, wie es in der Figur 6 dargestellt ist, mit einer Dispersion aus Keramikpartikeln getränkt wird. Als Material für das Halbzeug bzw. das glatte Material oder gewellte Material eignet sich dabei insbesondere Zellulose. Nach dem Trocknen wirkt die Zellulose als Matrix für die Keramik. Beim anschließenden Sintern und Brennen des mit Keramikflüssigkeit getränkten Filterelementes kann die Zellulose verbrennen, sodass keinerlei Rückstände verbleiben. Damit ist ein Filterkörper aus Keramik beispielsweise für Diesel- oder Rußpartikelfilter geschaffen.

Gegenüber üblichen Herstellungsverfahren und Filterelementen hat der parallele Klebstoffauftrag zu den Wellenbergen den Vorteil, dass benachbarte Strömungskanäle beispielsweise nicht nur durch einen Haftschluss voneinander getrennt sind, sondern auch durch den Klebstoff. Durch das streifenförmige Auftragen des Klebstoffs wird nur eine minimale Fläche von Filtermaterial verbraucht, sodass die Filteroberfläche dennoch groß ist. Insgesamt sind entsprechende Filterelemente stabiler als nach dem Stand der Technik..

## Patentansprüche

1. Verfahren zum Herstellen eines Filterelements, welches aneinander liegende Schichten von einem glatten Material (1) und einem gewellten Material (2) mit Wellenbergen (3) und Wellentälern (6) umfasst, wobei die Wellenberge (3) des gewellten Materials (2) auf das glatte Material (1) geklebt werden, **dadurch gekennzeichnet, dass** der Klebstoff (5) unter Ausbildung von parallelen Klebstoffstreifen auf das glatte Material aufgetragen wird, und anschließend die parallel zu den Klebstoffstreifen ausgerichteten Wellenberge (3) des gewellten Materials (2) entlang der Klebstoffstreifen aufgedrückt werden.

2. Verfahren nach Anspruch 1, wobei der Klebstoff (5) ausschließlich parallel zu den Wellenbergen (3) aufgetragen wird.

3. Verfahren nach einem der Ansprüche 1 oder 2, wobei der Klebstoff (5) durch ein Druckverfahren insbesondere Sieb- oder Offsetdruck auf das glatte Material (1) gedruckt wird.

4. Verfahren nach einem der Ansprüche 1 - 3, wobei der Klebstoff (5) mit einer Rolle (11) aufgetragen wird.

5. Verfahren nach einem der Ansprüche 1 - 4, wobei ein Halbzeugmaterial (8), welches das glatte und das gewellte Material (1, 2) umfasst, aufgewickelt wird, wobei der Klebstoffauftrag (5) im Wesentlichen senkrecht zu einer Wickelrichtung (R) erfolgt.

6. Verfahren nach einem der Ansprüche 1 - 5, wobei das glatte und/oder das gewellte Material (1, 2) ein Filtervliesmaterial, insbesondere ein Zellulosematerial, aufweist.

7. Verfahren nach einem der Ansprüche 1 - 6, wobei zum Herstellen eines Partikelfilters, insbesondere für Dieselabgase, das Filterelement (13) mit einer Keramikflüssigkeit getränkt und gebrannt wird.

## Claims

1. Method for manufacturing a filter element which comprises adjacent layers of a smooth material (1) and of a wavy material (2) with wave peaks (3) and wave troughs (6), the wave peaks (3) of the wavy material (2) being glued on the smooth material (1), **characterized in that** the adhesive (5) is applied by parallel adhesive strips on the smooth material and that the wave peaks (3) of the wavy material (2) which are aligned in parallel with the adhesive strips are then applied by pressing them along the adhesive strips.

2. Method according to claim 1, wherein the adhesive (5) is exclusively applied parallel to the wave peaks (3).

3. Method according to one of the claims 1 or 2, wherein the adhesive (5) is printed on the smooth material (1) by means of a printing process, in particular screen or offset printing.

4. Method according to one of the claims 1-3, wherein the adhesive (5) is applied by means of a roll (11).

5. Method according to one of the claims 1-4, wherein a semi-finished material (8) which comprises the smooth and the wavy material (1, 2) is wound up, wherein the adhesive application (6) is realized substantially perpendicular to a winding direction (R).

6. Method according to one of the claims 1-5, wherein the smooth and/or the wavy material (1, 2) features a filter fleece material, in particular a cellulose material.

7. Method according to one of the claims 1-6, wherein the filter element (13) is soaked with a ceramic liquid and burnt for manufacturing a particle filter, in particular for diesel exhaust gases.

## Revendications

1. Procédé de fabrication d'un élément filtrant qui comprend des couches contigües d'un matériau lisse (1) et d'un matériau ondulé (2) avec des sommets (3) et des creux (6), les sommets (3) du matériau ondulé (2) étant collés sur le matériau lisse (1), **caractérisé en ce que** la colle (5) est appliquée sur le matériau lisse en formant des bandes de colle parallèles et que, par la suite, les sommets (3) du matériau ondulé (2) orientés de manière parallèle aux bandes de colle sont pressés le long des bandes de colle.

2. Procédé selon la revendication 1, la colle (5) étant appliquée exclusivement de façon parallèle aux sommets (3).

3. Procédé selon l'une des revendications 1 ou 2, la colle (5) étant imprimée selon un mode d'impression, notamment par sérigraphie ou en offset, sur le matériau lisse (1).

4. Procédé selon l'une des revendications 1 - 3, la colle (5) étant appliquée à l'aide d'un rouleau (11).

5. Procédé selon l'une des revendications 1 - 4, un matériau semi-fini (8) enveloppant le matériau lisse et le matériau ondulé (1, 2) étant enroulé, l'application de colle (5) étant essentiellement opérée verticalement à un sens d'enroulement (R).

6. Procédé selon l'une des revendications 1 - 5, le matériau lisse et/ou le matériau ondulé (1, 2) présentant un matériau non-tissé, notamment un matériau cellulosique.

7. Procédé selon l'une des revendications 1 - 6, l'élément filtrant (13) étant, pour la fabrication d'un filtre à particules, en particulier pour des gaz d'échappement diesel, imbibé d'un liquide céramique et cuit.
